# EUROPEAN PATENT APPLICATION

(11) **EP 4 439 410 A1**
(43) Date of publication of application: **02.10.2024**
(21) Application number: 23164338.8
(22) Date of filing: 27.03.2023
(51) Int. Cl.: G06Q 10/04, G06F 16/00, G06N 20/00, G06Q 50/16

(54) **METHODS AND SYSTEMS FOR PREVENTING THE DEMOLITION, DAMAGE AND ALTERATION OF LISTED BUILDINGS**

(71) Applicant: Zurich Insurance Company Ltd., Fareham, Hampshire PO15 7JZ (GB)
(72) Inventor: Davis, Jonathan, Fareham PO15 6DG (GB)
(74) Representative: Hepp Wenger Ryffel AG

(57) **Abstract**

The present invention relates to computer-implemented methods for preventing the demolition, damage and alteration of listed buildings by determining a probability of at least one address being a listed building. The invention further relates to a machine-learning model, computer-implemented methods of generating a training dataset, a training dataset, and computer-implemented methods of training a machine-learning model. It also relates to a data processing system, a computer program, and a computer-readable medium.

## Description

The present invention relates to computer-implemented methods for preventing the demolition, damage and alteration of listed buildings by determining a probability of at least one address being a listed building. The invention further relates to a machine-learning model, computer-implemented methods of generating a training dataset, a training dataset, and computer-implemented methods of training a machine-learning model. It also relates to a data processing system, a computer program, and a computer-readable medium.

The protection of culturally and historically relevant buildings (i.e. listed buildings) serves to ensure that they are permanently preserved and not altered, damaged, impaired or destroyed, thus safeguarding these cultural assets. Anyone who unlawfully alters, damages or even demolishes a listed building must expect consequences under the law. Such alterations, damages or demolitions often cannot be undone. If, for example, a construction company is to carry out building work at a certain address, it is therefore essential for the company to know whether the address or a neighbouring address belongs to a listed building in order to take appropriate precautions. Likewise, confusion between protected and non-protected buildings need to be prevented. This prevents delays in the construction process and monetary losses.

In many countries, for example in the United Kingdom (UK), listed buildings are recorded in registers together with listed non-building structures. However, by means of these register entries it is not always clear whether an address belongs to a listed building.

Firstly, these register entries often do not include a unique address, but only the coordinates and a description of the listed structure. The coordinates of the listed structure in the register entry often do not exactly match the coordinates of the corresponding address in an address database. For example, if it is a large building complex, the coordinate in the address database may be at the entrance door, while the coordinate of the listed building entry is in the centre of the land parcel, or vice versa. So it may be that the coordinate of the address is far away from the coordinate of the listed building entry. Thus, it cannot be clearly said that the two entries belong to each other.

Secondly, as already mentioned, the heritage registers often include both listed buildings and listed non-building structures. A listed non-building structure is, for example, a listed telephone box, a park bench or a fire hydrant. There are often no clear markings in the register entries as to which entries are a building and which are a non-building structure. However, this distinction is fundamentally important, as one does not want to assign an address to a listed non-building structure, but only to a listed building.

So a method must be found to assign an address to a listed building without assigning the address to a listed non-building structure. In the prior art, there are no such methods that relate to listed buildings.

In general, procedures such as point of interest (POI) matching are known in the prior art, wherein POI pairs are to be found that refer to the same real-world entity. Methods in the prior art usually perform a similarity calculation using parameters such as the spatial similarity (i.e. spatial distance) and the name similarity (DENG, Y. et al. Point of Interest Matching between Different Geospatial Datasets. ISPRS Int. J. Geo-Inf. 2019, Vol. 8, No. 435, p. 1-18).

Methods such as the above often apply the concept of nearest neighbour match and/or check whether there is a listed structure nearby. In nearest neighbour matching, the entries that are the shortest distance from each other are essentially assigned to each other. Some methods determine the string distance between textual parts of the entries, where the textual entries are for example the address and/or the description of a structure.

In the case of listed building identification, as described above, an address must be assigned to an entry of a listed structure and it must be determined whether the listed structure is actually a building. The inventor found out that the nearest neighbour match with or without determining the string distance between the entries is not sufficient to achieve useful results in this case, as these values alone do not say much about whether a listed structure entry actually belongs to an address. The listed structure entry may very often belong to an adjacent building instead or the listed structure entry may not be a building at all, but a non-building structure, such as a telephone booth. The text analysis of a listed structure entry and an address entry using string distance alone, for example, often leads to a less meaningful result, as the content of the entry often does not contain parts of the associated address, which would erroneously lead to a high string distance. The usual methods from the prior art can therefore not be applied here with the data available.

US 11270397 B2 (UNIV SOUTHEAST, 08 March 2022) discloses an automatic urban land identification system integrating business big data with building forms. The system automatically analyses an urban area by extracting a data distribution feature of an urban business site and a multi-dimensional form feature of an urban spatial three-dimensional entity. The system can be used for the determining of land usage of an urban plot in the field of urban planning and design, to achieve efficient and automatic refined identification of land usages. The systems in this prior art document would not be able to be adapted to perform listed building identification with the data available for this purpose, as in the case of this prior art document, it is already known in advance which address belongs to which building.

US 2021224821 A1 (BEIJING BAIDU NETCOM SCI & TECH CO LTD, 22 July 2021) discloses a land usage property identification method. The method uses so called area-of-interest data (e.g. residential community, university, office building, industrial park, shopping mall, hospital, scenic spot, gymnasium) and point-of-interest data (e.g. house, shop, community entrance, bus station) and applies a "term frequency-inverse document frequency" (tf-idf) algorithm to create a map with different zones of a city. This method does not aim to match an address to an entry of a structure type, in particular a listed building. Again, it is already known in advance which address belongs to which building. The method can thus not be adapted to perform listed building identification with the data available for this purpose.

US 11372900 B1 (CORELOGIC SOLUTIONS LLC, 28 June 2022) discloses a data linking system that links data records corresponding to a particular real estate property even if there are inconsistencies in the data records, the physical presence of the real estate property has changed over time, and/or the data records use different terminology. In some embodiments, the data records are matched using a trained machine learning model. In this case, too, the same initial conditions do not apply as when determining whether there is a listed building at a particular address.

The prior art methods are therefore either not sufficiently advanced to achieve accurate results for identifying listed buildings, as for example a mere nearest neighbour match is not sufficient, and/or these methods are not applicable to the given target in the first place, because, for example, very different types of data have to be processed.

It is therefore an object of the present invention to overcome at least some, if not all shortcomings of the prior art methods. In particular, it is an object of the invention to provide a method for determining whether a building at a particular address is a listed building for preventing the building from being demolished, damaged, altered or a combination thereof, for example by a construction company.

Towards this end, a first aspect of the invention pertains to a computer-implemented method for preventing the demolition, damage, alteration or a combination thereof of listed buildings by determining a probability of at least one address in a first input dataset being a listed building using a computer device.

The method comprises a step of providing a machine-learning model having a set of listed building classification parameters based on geospatial and contextual information.

The method further comprises a step of receiving the first input dataset comprising the at least one address.

The method yet further comprises a step of receiving a second input dataset comprising at least one listed structure entry, preferably a plurality of listed structure entries.

The method also comprises a step of applying the machine-learning model to the at least one address, wherein i. the machine-learning model has been trained with a training dataset to determine the probability of an address being a listed building using the set of listed building classification parameters and the at least one listed structure entry, preferably the plurality of listed structure entries; and ii. the probability is used to assign a label indicating whether the address is a listed building using a predefined threshold.

The method comprises a step of producing a first output dataset comprising the at least one address from the first input dataset; and at least one of the determined probability and the assigned label for the at least one address.

In the context of the present invention, a listed building is a structure of architectural and/or historic interest deserving of special protection. Other synonymous terms for this are land-marked buildings, historic buildings, heritage buildings, protected buildings, monumental buildings, architectural relics and grade-listed buildings. Listed buildings are usually listed in a heritage register along with other non-building structures. A listed building may not be demolished, extended, or altered without special permission from the local planning authority, which typically consults the relevant central government agency. A building may also be a building complex.

In the context of the present invention, the demolition of a listed building refers to the essentially complete and irreversible destruction of a building; the damage of a listed building refers to the at least partial destruction of a functional and/or aesthetic part of a building; the alteration of a listed building refers to making changes to functional and/or aesthetic parts of a building; it can also mean attaching another part to a building. In the context of the invention, preventing any of the aforementioned actions means that, by means of the method according to the invention, it is determined before the start of the respective action at a building at a certain address whether the building at this address is a listed building. The act shall be deemed to have been prevented if it is established by means of the method according to the invention that the building in question is a listed building and if the corresponding act is not thereby performed.

In the context of the present invention the addresses of the first input dataset comprise an address string, an address identifier, land parcel information, or any combination thereof. The land parcel information comprises the land parcel length, the land parcel width, the spatial orientation of the land parcel, the land parcel coordinates or any combination thereof. The coordinates are preferably located at the centroid of the land parcel. An address string comprises a street name, at least one house number, a postcode, country information, house name, quadrants, county information, city information, town information, village information, or any combination thereof. An address identifier is understood to be a string that is assigned to a specific address. Each address has its own unique identifier. A land parcel is an area of land that is legally described and recorded in a government or private records system.

Within the context of the construction environment, the term "structure" refers to anything that is constructed or built from different interrelated parts with a fixed location on the ground. The term can be sub-divided into "buildings" and "non-building structures". A building is an enclosed structure with a roof and walls standing more or less permanently in one place, such as a house or factory. Examples of buildings comprise residential buildings; commercial buildings, such as offices, retail stores, and hotels; industrial buildings, such as warehouses, laboratories, and factories; infrastructure buildings; institutional buildings, such as hospitals and colleges. A non-building structure is a structure that was not designed for continuous human occupancy. Examples for non-building structures are boat lifts, bridges, conservatories, dams, fountains, telephone boxes, fire hydrants, gates, monuments, pyramids, roads, silos, streetlights, street signs and swimming pools.

In the context of the present invention, the at least one structure entry, preferably the plurality of listed structure entries, comprises a listed structure identifier, listed structure coordinates, a listed structure string or any combination thereof. The listed structure string comprises a name and/or a description of a listed structure. A listed structure identifier is understood to be a string that is assigned to a specific listed structure. Each listed structure has its own unique identifier.

In the context of the present invention, a set of listed building classification parameters comprises more than one of these parameters. At least one listed building classification parameter is based on geospatial and at least one is based on contextual information. Geospatial information is for example a geospatial distance between two coordinates (such as the land parcel coordinate of an address and the listed structure coordinate of its closest listed structure entry), a land parcel length, a land parcel width, the spatial orientation of a land parcel, information about whether the listed structure coordinate lies within the land parcel boundaries of the nearest land parcel coordinate, or values derived from these. Contextual information is for example a string comprising an address, a name of a listed structure, a description of a listed structure or a combination thereof. In particular, not only the string distance between the address string and the listed structure string are determined, but it is also determined whether the listed structure entry describes a building or a non-building structure. This is essential to exclude listed non-building structures from being wrongfully assigned to an address. This is preferably done using a further machine learning model trained for this purpose.

In the context of the present invention, the probability of an address being a listed building is a real number, preferably between 0 and 1, that is determined using the trained machine-learning model. The higher the value of the number, the higher the probability that the address is a listed building. To obtain a binary value for the assignment, a predefined threshold is used to determine whether the address is a listed building or not, which is reflected in the resulting label. The choice of threshold depends on the statistical distribution of the values resulting from the trained machine-learning model.

The output dataset comprises the at least one address from the first input dataset. Additionally, it comprises either the determined probability, the assigned label or both, depending on the application. The output dataset can be a list of entries and/or the data can be prepared in such a way that the buildings belonging to the addresses are marked in colour on a map and that the colour marking visually represents the probability and/or the label.

Preferably, the method comprises a further step of deciding whether a building can be demolished, damaged or altered, wherein the decision is made by a user and the decision depends on the label and/or the probability obtained for the address belonging to the building, in order to prevent the demolition, damage or alteration of listed buildings.

The described method according to the invention works by combining the selected listed building classification parameters based on the geospatial and contextual information, then using these parameters to train a machine-learning model and using the trained model to obtain a probability and/or a label indicating whether a building at an address is a listed building. The method allows to find out if an address belongs to the same building as the next listed structure entry, not only if the address is close to a listed structure entry. The method solves a number of problems that other methods for related purposes cannot solve.

Firstly, the geospatial information used as part of the machine-learning model of the method according to the invention not only relies on a nearest neighbour matching and it is not only based on whether there is a listed building near the address. It also takes into account whether the address and the listed structure entry are located within the same land parcel, how close other addresses than the closest address are to the listed structure entry, and the land parcel size (the larger the land parcel size, the greater the acceptable distance between the address and the listed structure entry). These listed building classification parameters based on geospatial information are crucial to assign a high significance to the correct listed structure entry corresponding to an address and a low significance to the incorrect entries.

Secondly, the contextual information used as part of the machine-learning model of the method according to the invention not only relies on the string distance between the address and the listed structure entries. It also considers whether the listed structure entry closest to the address describes a building at all. This is because listed structure databases often contain both listed buildings and listed non-building structures. Therefore, a further machine-learning model is applied to determine the contextual building score, which describes whether a listed structure entry refers to a building. This renders a more meaningful result about whether a listed structure entry is actually a building and whether the listed structure entry actually belongs to the address closest to it. This helps to avoid labelling an address as a listed building, although the closest listed structure entry actually refers to a phone box nearby and not to the building.

Therefore, these listed building classification parameters contribute to solving the problem of the present invention. This method allows for example construction companies to determine whether there is a listed building at an address or at an adjacent address where construction work is to be carried out. This prevents destroying, damaging or changing the listed building at the address or at a neighbouring address.

Without wishing to be bound by theory, it is believed that the choice and combination of the listed building classification parameters described based on geospatial and contextual information lead to a high precision and accuracy in determining whether and address belongs to a listed building.

In a preferred embodiment of the first aspect of the invention, the at least one address comprises an address string, an address identifier, land parcel information or any combination thereof. The land parcel information comprises the land parcel length, the land parcel width, the spatial orientation of the land parcel, the land parcel coordinates or any combination thereof. The coordinates are preferably located at the centroid of the land parcel.

In the same or in a different preferred embodiment of the first aspect of the invention, the at least one listed structure entry, preferably the plurality of listed structure entries, comprises a listed structure identifier, listed structure coordinates, a listed structure string or any combination thereof. The listed structure string comprises a name and/or a description of a listed structure.

In the context of the present invention, the term "or" is to be understood as an exclusionary disjunction. "A or B" states that exactly one of the two statements is true (if the disjunction is true).

In a preferred embodiment of the first aspect of the invention, the step of applying the machine-learning model comprises a step of assigning to each of the at least one address from the first input dataset the one listed structure entry from the second input dataset with the shortest spatial distance between the land parcel coordinates and the listed structure coordinates to generate at least one address-listed structure entry pair.

In the same preferred embodiment of the first aspect of the invention, the step of applying the machine-learning model comprises a step of determining indices of the at least one address-listed structure entry pair using the listed building classification parameters, wherein the determination of the indices comprises processing geospatial and/or contextual information.

It has been found that if one uses the listed building classification parameters described based on geospatial and/or contextual information in the method of the first aspect of the invention, one obtains very precise results when it comes to determining whether the building associated with an address is a listed building.

In another preferred embodiment of the first aspect of the invention, each index of the listed building classification parameters for the at least one address-listed structure entry pair is preferably determined by any one of the following methods:
- determining the geospatial distance between the land parcel coordinate and the listed structure coordinate of an address-listed structure entry pair;
- dividing the geospatial distance between the land parcel coordinate and the listed structure coordinate of an address-listed structure entry pair by the geospatial distance between the listed structure coordinate and its second closest land parcel coordinate;
- dividing the geospatial distance between the land parcel coordinate and the listed structure coordinate of an address-listed structure entry pair by the land parcel length;
- determining whether the listed structure coordinate is geospatially located within the boundaries of the land parcel of the address of an address-listed structure entry pair.
- determining the contextual string distance between the address string and the listed structure string of an address-listed structure entry pair; or
- determining a contextual building score using a further machine-learning model, wherein the contextual building score indicates the likelihood a listed structure entry of an address-listed structure entry pair to describe a building.

The indices of the listed building classification parameters of the at least one address-listed structure entry pair are used by the trained machine-learning model to determine the probability of an address being a listed building.

As described earlier, it was found that the choice and combination of these listed building classification parameters are optimal for a machine-learning model to determine whether a listed building belongs to an address.

The methods to determine the indices of the listed building classification parameters based on geospatial information concern the location of the address and the listed structure entry.

The distance between the land parcel coordinate of the address and the listed structure coordinate are determined in the first method. This is the most basic discriminatory variable, as the address needs to be close to a listed structure for it to be likely a listed building. Although this is an important parameter, it is not sufficient for determining whether an address belongs to a listed building with a high accuracy and precision.

The distance between the land parcel coordinate and the listed structure coordinate divided by the distance between the land parcel coordinate and its closest land parcel coordinate is determined in the second method. Whether or not the address is considered close to the listed structure depends on how close the nearest neighbouring address is. For example, if a listed structure is close to an address, but even closer to the neighbouring address, it is probably referring to the neighbour.

The distance between the land parcel coordinate and the listed structure coordinate divided by the length of the land parcel is determined in the third method. For a large land parcel, the land parcel coordinate and the listed structure coordinate can be far apart but still relate to each other.

In the fourth method, it is determined whether the listed structure coordinate lies within the land parcel of the address. If this is true, it is more likely that they relate to each other.

The methods to determine the indices of the listed building classification parameters based on contextual information concern the nature of the listed structure entry (i.e. whether it describes a building or a non-building structure).

The string distance between the address string and the listed structure string is determined in the fifth method. Often, but not in all cases, the name of a listed structure is similar to the corresponding address. The string distance is used to provide the model with an understanding of the similarity between the address and the name of the nearest listed structure. The lower the string distance, the better the match. Preferably, the string distance is determined using the Jaccard method, the Jaro-Winkler method, the Optimal String Alignment (OSA) method or a combination thereof. The fifth method allows for example matching all addresses on a street to one listed structure entry, if the listed structure entry refers to all buildings of the whole street.

A contextual building score is determined using a further machine-learning model in the sixth method. The likelihood is returned as a probability, a Boolean label or both. Since not every listed structure entry refers to a building, but rather certain entries refer to non-building structures, the contextual building score, which is determined using a further machine-learning model, is used to determine whether a listed structure entry is actually a building. Whether or not a listed structure entry refers to a building will affect how likely the nearest address is to be a listed building. For example, if an address is 2 m away from a post box, the address is not listed. However, if it is 2 m from a listed structure entry for a building, it probably is listed.

A second aspect of the invention pertains to a machine-learning model for determining a probability of at least one address in a first input dataset being a listed building, in particular for use in any method of the first aspect of the invention. The machine-learning model comprises:
- a set of listed building classification parameters based on geospatial and contextual information;
- adjusted weights for the set of listed building classification parameters; and
- a set of instructions configured to cause a processor to receive at least one address and to determine the probability of the at least one address being a listed building using the adjusted weights; and to output the probability.

The listed building classification parameters of the machine-learning model are the same as the ones used in the methods of the first aspect of the invention.

The adjusted weights for the set of listed building classification parameters are the result of training the machine-learning model.

It has been found that the use of a machine-learning model using the listed building classification parameters as described returns very precise results when it comes to determining whether the building associated with an address is a listed building. The machine-learning model can therefore be employed to prevent the demolition, damage and alteration of listed buildings.

A third aspect of the invention pertains to a computer-implemented method of generating a training dataset for a machine-learning model, in particular the machine-learning model of the second aspect of the invention.

The method comprises a step of receiving the first input dataset comprising the at least one address, wherein the at least one address comprises an address string, an address identifier, land parcel information or any combination thereof. The land parcel information comprises a land parcel length, a land parcel width, a spatial orientation of the land parcel, land parcel coordinates or any combination thereof. The coordinates are preferably located at the centroid of the land parcel.

The method further comprises a step of receiving a second input dataset comprising at least one listed structure entry, preferably a plurality of listed structure entries. The at least one listed structure entry, preferably the plurality of listed structure entries, comprises a listed structure identifier, listed structure coordinates, a listed structure string or any combination thereof. The listed structure string comprises a name and/or a description of a listed structure.

The method yet further comprises a step of assigning to each of the at least one address from the first input dataset the one listed structure entry from the second input dataset with the shortest spatial distance between the land parcel coordinates and the listed structure coordinates to generate at least one address-listed structure entry pair.

The method also comprises a step of receiving a set of listed building classification parameters.

The method further comprises a step of determining indices of the at least one address-listed structure entry pair using the listed building classification parameters,
wherein the determination of the indices comprises processing geospatial and/or contextual information.

The method further comprises a step of generating a training dataset by manually assigning Boolean labels indicating whether the address belongs to a listed building for each of the at least one address of at least the subset of the at least one address-listed structure entry pair.

The listed building classification parameters of the method of the third aspect of the invention are the same as the ones used in the methods of the first aspect of the invention and the ones used in the machine-learning model of the second aspect of the invention.

The step of manually labelling at least a subset of the at least one address-listed structure entry pair comprises for each address-listed structure entry pair in at least the subset:
- a step of finding the address of the address-listed structure entry pair on a map;
- a step of finding the listed structure of the address-listed structure entry pair on a map;
- a step of deciding whether the address belongs to the listed structure entry using the geospatial and contextual information contained in the address data and listed structure entries; and
- a step of assigning a Boolean label indicating whether the address belongs to a listed building.

As is common in training machine-learning models, the labelled training data is preferably divided so that about 80 % of the labelled training data is used for training and about 20 % of the data is used for testing the trained model.

Preferably, the subset comprises only address-listed structure entry pairs, wherein the spatial distances between the land parcel coordinates and the listed structure coordinates are smaller than 200 m, more preferably smaller than 100 m, most preferably smaller than 50 m.

Preferably, the subset comprises approximately 500 address-listed structure entry pairs.

Preferably, the subset comprises at least 100, more preferably at least 200, most preferably at least 500 address-listed structure entry pairs, wherein the address corresponds to a listed building.

It has been found that if one uses the listed building classification parameters described above based on geospatial and/or contextual information in the method of the third aspect of the invention to generate a training dataset for a machine-learning model, and if one trains a machine-learning model with this training data, one obtains a machine-learning model that is capable of returning very precise results when it comes to determining whether the building associated with an address is a listed building. The method according to the third aspect of the invention can therefore be employed to prevent the demolition, damage and alteration of listed buildings.

In a preferred embodiment of the third aspect of the invention, each index of the listed building classification parameters for the at least one address-listed structure entry pair is determined by any one of the following methods:
- determining the geospatial distance between the land parcel coordinate and the listed structure coordinate of an address-listed structure entry pair;
- dividing the geospatial distance between the land parcel coordinate and the listed structure coordinate of an address-listed structure entry pair by the geospatial distance between the listed structure coordinate and its second closest land parcel coordinate;
- dividing the geospatial distance between the land parcel coordinate and the listed structure coordinate of an address-listed structure entry pair by the land parcel length;
- determining whether the listed structure coordinate is geospatially located within the boundaries of the land parcel of the address of an address-listed structure entry pair;
- determining the contextual string distance between the address string and the listed structure string of an address-listed structure entry pair; or
- determining a contextual building score using a further machine-learning model. The contextual building score indicates the likelihood a listed structure entry of an address-listed structure entry pair to describe a building.

As described earlier, it was found that the choice and combination of these listed building classification parameters are optimal for a machine-learning model to determine whether a listed building belongs to an address. The individual methods for determining the indices have been described in the description of the first aspect of the invention. The same advantages originating from employing these methods apply here.

In a preferred embodiment of the first or third aspect of the invention, the further machine-learning model for determining the contextual building score is a neural network and the determination of the contextual building score comprises:
- a step of providing the neural network that has been trained with a further training dataset to determine a further probability of at least one listed structure entry, preferably a plurality of listed structure entries, to describe a building;
- a step of receiving at least one listed structure entry, preferably a plurality of listed structure entries;
- a step of applying the neural network to the at least one listed structure entry, preferably the plurality of listed structure entries, to determine the further probability of the at least one listed structure entry, preferably the plurality of listed structure entries, to describe a building;
- optionally, a step of assigning a further label indicating whether the at least one listed structure entry, preferably the plurality of listed structure entries, describes a building using the further probability and a predefined threshold;
- returning the further probability and/or the further label as the contextual building score for the at least one listed structure entry, preferably the plurality of listed structure entries.

In the context of the present invention, the further probability of a listed structure entry to describe a building is a real number, preferably between 0 and 1, that is determined using the trained neural network. The higher the value of the number, the higher the probability that the listed structure entry describes a building. To obtain a binary value for the assignment, a predefined threshold is used to determine whether the listed structure entry describes a building, which is reflected in the resulting further label. The choice of the threshold depends on the statistical distribution of the values resulting from the trained neural network.

The neural network is trained using a plurality of manually labelled listed structure entries, preferably at least 1000 listed structure entries. The manual label indicates whether the listed structure entry describes a building or a non-building structure. During training of the neural network and during executing the trained neural network, the listed structure string is tokenized and used as an input to train the neural network or to execute the trained neural network.

It was found that the contextual building score determined using a neural network is a crucial listed building classification parameter. This is because it eliminates listed structure entries that are not buildings but non-building structures with a high degree of reliability.

A fourth aspect of the invention pertains to a training dataset for training a machine-learning model of the second aspect of the invention.

The training dataset may comprise at least a subset of an at least one address-listed structure entry pair, in particular at least the subset generated in the method of the third aspect of the invention.

The training dataset may also comprise indices of listed building classification parameters for the at least one address-listed structure entry pair, in particular the indices determined in the method of the third aspect of the invention.

The training dataset may further comprise Boolean labels for the at least one address-listed structure entry pair, in particular the Boolean labels manually assigned in the method of the third aspect of the invention.

The training dataset may comprise any combination of the items mentioned.

A fifth aspect of the invention pertains to computer-implemented method of training a machine-learning model for determining a probability of at least one address in a first input dataset being a listed building, in particular the machine-learning model of the second aspect of the invention.

The method comprises a step of receiving a manually labelled training dataset, in particular the training dataset generated in the method of the third aspect of the invention. The training dataset comprises a set of listed building classification parameters based on geospatial and contextual information.

The method further comprises a step of manually determining an initial weight for each listed building classification parameter.

The method also comprises a step of training the machine-learning model by providing the training dataset and by providing instructions to the machine-learning model to adjust the weights of the listed building classification parameters based on the training dataset to generate adjusted weights of the listed building classification parameters.

The method further comprises a step of evaluating the performance of the machine-learning model based on a test dataset.

The method yet further comprises a step of producing a second output dataset comprising the adjusted weights of the listed building classification parameters.

It was found that the use of the geospatial and contextual listed structure classification parameters in the machine-learning model according to the invention leads to excellent results in determining whether an address belongs to a listed building. The use of geospatial or contextual information alone would not lead to the same good results.

In a preferred embodiment of the fifth aspect of the invention, the machine-learning model is trained using an ensemble learning algorithm, preferably a boosting ensemble learning algorithm, more preferably a stochastic gradient boosting ensemble learning algorithm, most preferably XGBoost.

It was found that the use of an ensemble learning algorithm, preferably a boosting ensemble learning algorithm, more preferably a stochastic gradient boosting ensemble learning algorithm, most preferably XGBoost leads exceptionally good results when used in combination with the geospatial and contextual listed structure classification parameters according to the invention. In particular, XGBoost allows the model to get the most out of the structure classification parameters, as it is non-linear. If the structure classification parameters were not as sophisticated, the model would not benefit from XGBoost as much, compared to a linear model.

A sixth aspect of the invention pertains to a data processing system comprising means for carrying out the method of the first, third or fifth aspect of the invention, or any combination thereof.

A seventh aspect of the invention pertains to a computer program comprising instructions which, when the program is executed by a computer, cause the computer to carry out the method of the first, third or fifth aspect of the invention, or any combination thereof.

An eighth aspect of the invention pertains to a computer-readable medium comprising instructions which, when executed by a computer, cause the computer to carry out the method of the first, third or fifth aspect of the invention, or any combination thereof.

The invention will now be described by way of more specific embodiments. These embodiments are not intended to limit the gist of the invention in any way, but rather serve to ease understanding of the invention.
- Fig. 1:: simplified flow diagram of the method for preventing the demolition, damage, alteration or a combination thereof of listed buildings (LB);
- Fig. 2:: simplified flow diagram of the sub-steps comprised in the step of applying (140) the machine-learning model to the at least one address (A);
- Fig. 3:: simplified flow diagram of the method of generating a training dataset for a machine-learning model;
- Fig. 4:: exemplary process of generating address-listed structure entry pairs (A-LS) and assigning indices (I) to each address-listed structure entry pair (A-LS) using multiple listed building classification parameters (CP);
- Fig. 5:: exemplary illustration of three land parcels (P) with land parcel coordinates (PC); structures (S), which may be buildings (B) or listed non-building structures (LNB); and listed structure coordinates (LSC).

### Application of the Invention in the UK

In this example, it is described how the methods of the first, third and fifth aspects of the invention can be used with a machine-learning model of the second aspect of the invention and a training dataset of the fourth aspect of the invention to identify addresses (A) in the UK as listed buildings (LB) in order to prevent the demolition, damage, alteration or a combination thereof of listed buildings.

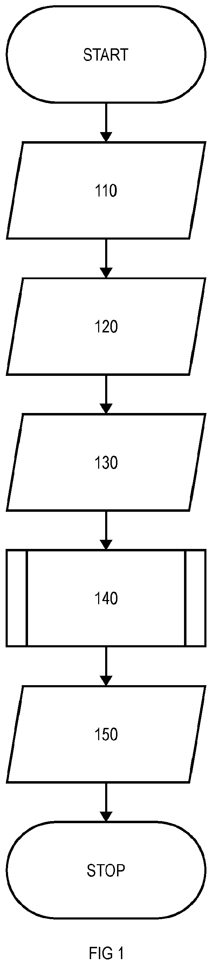

As outlined in the simplified flow diagram in Figure 1, the method of the first aspect of the invention comprises steps of receiving input data:
- providing (110) a machine-learning model having a set of listed building classification parameters (CP) based on geospatial and contextual information;
- receiving (120) the first input dataset (ID₁) comprising the at least one address (A); and
- receiving (130) a second input dataset (ID₂) comprising at least one listed structure entry (LS), preferably a plurality of listed structure entries (LS).

The address (A) data in the first input dataset (ID₁) comes from Address Base Premium and Pointer. The data comprise address strings (AS), address identifiers (AI), land parcel lengths (PL), land parcel widths (PW), land parcel orientations (PO) and land parcel coordinates (PC). The address identifiers (AI) are the unique property reference numbers (UPRNs). There are around 30 million addresses in this combined dataset.

The listed structure entry (LS) data in the second input dataset (ID₂) comes from four sources: Historic England, Historic Scotland, Cadw (Wales) and Open Data NI (Northern Ireland). The data comprise a listed structure identifier (LSI), listed structure coordinates (LSC) and a listed structure string (LSS). In total there are over 400 000 listed structures in the UK.

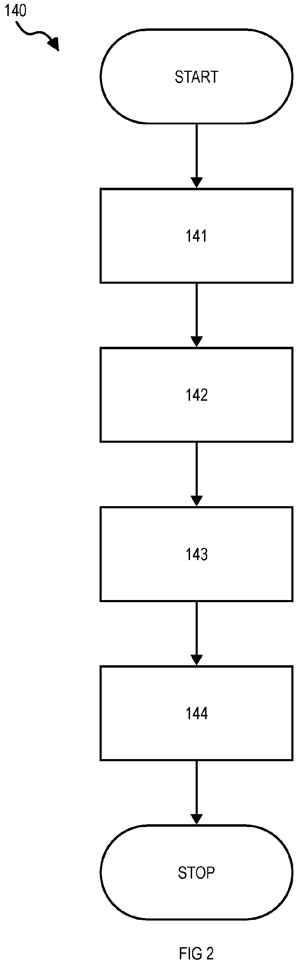

The machine-learning model is applied (140) to the at least one address (A) to produce (150) the first output dataset (Figure 1). The applying (140) of the machine-learning model comprises the steps shown in Figure 2:
- assigning (141) to each of the at least one address (A) from the first input dataset (ID₁) the one listed structure entry (LS) from the second input dataset (ID₂) with the shortest spatial distance between the land parcel coordinates (PC) and the listed structure coordinates (LSC) to generate at least one address-listed structure entry pair (A-LS);
- determining (142) indices (I) of the at least one address-listed structure entry pair (A-LS) using the listed building classification parameters (CP);
- determining (143) the probability of an address (A) being a listed building (LB) using the indices (I) of the at least one address-listed structure entry pair (A-LS) and the machine-learning model; and
- assigning (144) a label indicating whether the address (A) is a listed building (LB) using a predefined threshold.

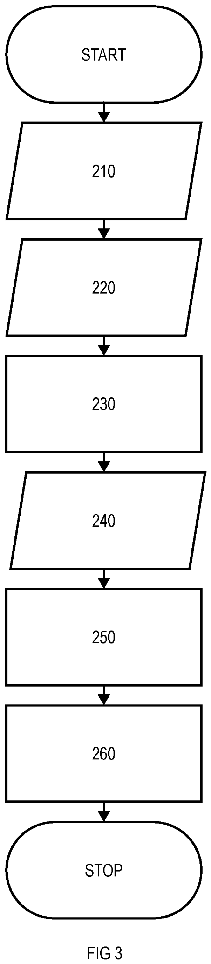

The training data used to train the machine-learning model are generated in a similar way (Figure 3):
- the first input dataset (ID₁) comprising the at least one address (A) is received (210); and
- a second input dataset (ID₂) comprising at least one listed structure entry (LS), preferably a plurality of listed structure entries (LS), is received (220).

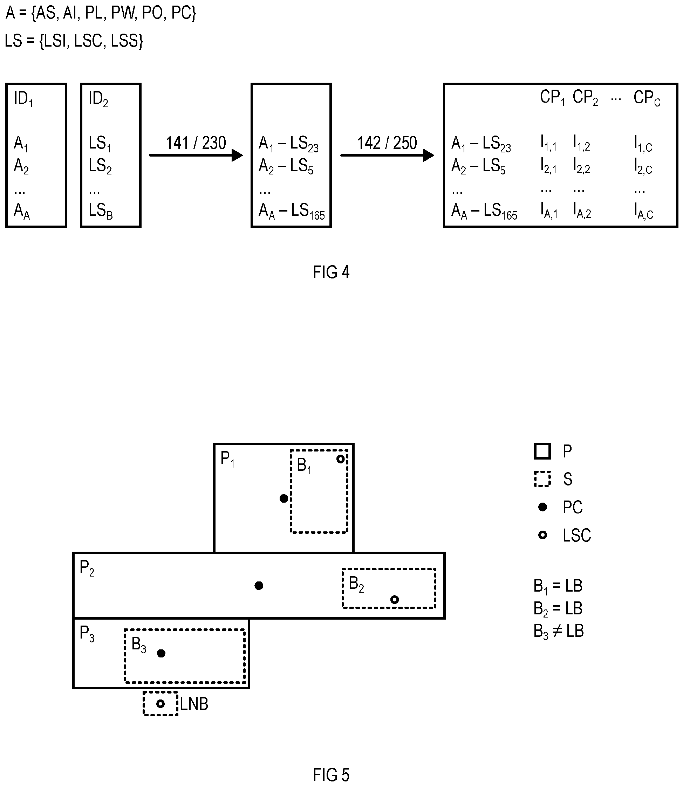

Both the applying (140) of the machine-learning model to the at least one address (A) (Figure 2), as well as the generating a training dataset for the machine-learning model (Figure 3) require address-listed structure entry pairs (A-LS) to be generated (141; 230). Indices (I) are then assigned (142; 250) to each address-listed structure entry pair (A-LS) using multiple listed building classification parameters (CP). This process is illustrated in Figure 4.

In the case of generating (260) the training dataset (Figure 3), Boolean labels are manually assigned to the address-listed structure entry pairs (A-LS) indicating whether the address (A) of the address-listed structure entry pair (A-LS) belongs to a listed building (LB).

In the case of applying the invention in the UK, approximately 500 address-listed structure entry pairs (A-LS) were labelled. The 500 address-listed structure entry pairs (A-LS) were a random selection out of the addresses (A) which had their land parcel coordinate (PC) within 50 m of a listed structure coordinate (LSC). This was done to ensure a good number of positive matches in the training dataset. Without this, a random sample of 500 would likely yield only 1 or 2 listed buildings (LB), which is not enough for the model. Thus, 147 addresses (A) of the 500 address-listed structure entry pairs (A-LS) were manually labelled as listed. An 80-20 split of these labelled data were used in a train-test split.

To train the machine-learning model, the ensemble learning algorithm XGBoost was used. A hyperparameter search with cross-validation was used to ensure the model does not over-fit. For a 10 % false positive rate, the model has a 90 % true positive rate to identify an address (A) as belonging to a listed building (LB). For a 10 % false negative rate, the model has a 97 % true negative rate to correctly identify that an address (A) does not belong to a listed building (LB).

Figure 5 shows an exemplary illustration of three land parcels (P: P₁, P₂, P₃) with land parcel coordinates (PC; black dots) . It also shows structures (S) as dashed boxes. These structures (S) can be buildings (B: B₁, B₂, B₃) or listed non-building structures (LNB). The listed structures (listed buildings (LB) and listed non-building structures (LNB)) also have listed structure coordinates (LSC; circles). In the example in Figure 5, only building 1 (B₁) and building 2 (B₂) are listed buildings (LB), while building 3 (B₃) is not a listed building (LB).

The first listed building classification parameter (CP) of the invention determines the distance between the land parcel coordinate (PC) and the listed structure coordinate (LSC) of an address-listed structure entry pair (A-LS). In the case of building 1 (B₁), this parameter alone correctly predicts a high likelihood of the address (A) of land parcel 1 (P₁) to belong to a listed building (LB). In the case of building 2 (B₂), however, the land parcel coordinate (PC) and the listed structure coordinate (LSC) are further apart from each other. This parameter alone would lead to a false negative result. Similarly, The land parcel coordinate (PC) of land parcel 3 (P₃) is close to a listed non-building structure (LNB) and would give a false positive result.

The second listed building classification parameter (CP) of the invention determines the distance between the land parcel coordinate (PC) and the listed structure coordinate (LSC) divided by the distance between the listed structure coordinate (LSC) and its second closest land parcel coordinate (PC). The listed structure coordinate (LSC) of building 2 (B₂) is closer to the land parcel coordinate (PC) of land parcel 2 (P₂) than to the land parcel coordinate (PC) of land parcel 1 (P₁). The machine-learning model therefore considers land parcel 2 (P₂) and building 2 (B₂) to be more likely to belong together on the basis of this parameter.

The third listed building classification parameter (CP) divides the distance between the land parcel coordinate (PC) and the listed structure coordinate (LSC) by the land parcel length (PL). The land parcel coordinate (PC) of land parcel 2 (P₂) is quite far from its closest listed structure coordinate (LSC) in Figure 5. However, since this parameter takes into account the land parcel length, the long distance plays a smaller role in this case.

The fourth listed building classification parameter (CP) determines whether the listed structure coordinate (LSC) is in the same land parcel (P) as the address (A). In the case of building 3 (B₃), it would therefore be correctly recognised that the listed structure entry is probably not the building associated with the address.

The fifth listed building classification parameter (CP) takes into account the string distance between the address (A) and the name of the listed structure entry (LS). Since the address string (AS) belonging to the address (A) of land parcel 3 (P₃) most likely has a quite high string distance from the name of the adjacent listed non-building structure (LNB), this parameter would indicate that this listed structure entry (LS) probably does not belong to the closest address (A) in Figure 5.

At the same time, the sixth listed building classification parameter (CP) would also point away from the listed non-building structure (LNB) in Figure 5 belonging to the address (A). If the listed non-building structure (LNB) is a statue, for example, the neural network used for the analysis of the description of the listed structure entry (LS) (contextual building score) would find the listed structure entry (LS) not to be a building (B) .

To train the neural network for the determination of the contextual building score, 100 randomly selected listed structure entries (LS) were manually labelled, based on human judgement as to whether the description of the listed structure entry (LS) is describing a building or not. The output of the neural network is a score between 0 and 1 as to the probability of the listed structure entry (LS) describing a building.

The use of the described listed building classification parameters (CP) results in buildings 1 and 2 (B₁ and B₂) being correctly classified as listed buildings (LB) with the methods according to the invention and building 3 (B₃) being correctly classified as not a listed building (LB).

### Example 1

In this example, the method according to the invention was applied to an address (A) next to a listed phone box which is a listed non-building structure (LNB). The address (A) is correctly identified as not to belong to a listed building (LB), as the resulting probability of the address (A) belonging to a listed building (LB) is 0.53, which is a relatively low value (Table 1) .

**Table 1: Address (A) information, listed structure entry (LS) information and indices (I) of the listed building classification parameters (CP) used in example 1.**

| **Parameter** | **Value** |
|---|---|
| Address identifier (AI) | 100023229361 (UPRN) |
| Address string (AS) | 2 OAKDEN STREET LON-DON SE11 4UG |
| Listed structure identifier (LSI) | 1249704 |
| Listed structure entry (LS) name | K2 TELEPHONE KIOSK |
| Spatial distance PC-LSC [m] | 8.246211251 |
| Spatial distance PC-LSC [m] divided by spa-tial distance LSC to second closest PC [m] | 2 |
| Land parcel area [m²] | 102.955 |
| LSC and address (A) in the same land parcel (P) ? | Unknown |
| Jaccard string distance between AS and LSS | 0.942857143 |
| Jaro-Winkler string distance between AS and LSS (p=0. 1) | 0.41540404 |
| Jaro-Winkler string distance between AS and LSS (p=0. 2) | 0.41540404 |
| OSA string distance between AS and LSS | 18 |
| Contextual building score [0:1] determined by neural network | 0.01 |
| *Probability of address (A) belonging to a listed building (LB)* | *0.53* |

In a simpler approach, all addresses (A) in a defined radius around each listed structure entry (LS) (e.g. 25 m) are labelled as listed buildings (LB). For example 1, this method would have incorrectly associated the listed structure entry (LS) with the address (A) due to their proximity, as it is incapable of incorporating the contextual information and other geospatial factors such as land parcels (P).

### Example 2

In this example, the method according to the invention was applied to an address (A) belonging to a listed building (LB). The address (A) is correctly identified as to belong to a listed building (LB), as the resulting probability of the address (A) belonging to a listed building (LB) is 0.88, which is a relatively high value (Table 2).

**Table 2: Address (A) information, listed structure entry (LS) information and indices (I) of the listed building classification parameters (CP) used in example 1.**

| **Parameter** | **Value** |
|---|---|
| Address identifier (AI) | 10070626916 (UPRN) |
| Address string (AS) | TIPNOAKS LONDON ROAD HASSOCKS BN6 9BJ |
| Listed structure identifier (LSI) | 1025644 |
| Listed structure entry (LS) name | TIPNOAKS |
| Spatial distance PC-LSC [m] | 2.236067977 |
| Spatial distance PC-LSC [m] divided by spatial distance LSC to second closest PC [m] | 0.203278907 |
| Land parcel area [m²] | 1992.442921 |
| LSC and address (A) in the same land par-cel (P)? | TRUE |
| Jaccard string distance between AS and LSS | 0.72 |
| Jaro-Winkler string distance between AS and LSS (p=0. 1) | 0.144827586 |
| Jaro-Winkler string distance between AS | 0.048275862 |
| and LSS (p=0.2) | |
| OSA string distance between AS and LSS | 21 |
| Contextual building score [0:1] deter-mined by neural network | 0.92570686 |
| *Probability of address (A) belonging to a listed building (LB)* | *0. 88* |

If all addresses (A) in a defined radius around each listed structure entry (LS) (e.g. 25 m) are labelled as listed buildings (LB), not only would the address (A) in Table 2 be identified as a listed building (LB), but also other buildings (B) in the defined radius.

## Claims

1. A computer-implemented method for preventing the demolition, damage, alteration or a combination thereof of listed buildings (LB) by determining a probability of at least one address (A) in a first input dataset (ID₁) being a listed building (LB) using a computer device, the method comprising:
- a step of providing (110) a machine-learning model having a set of listed building classification parameters (CP) based on geospatial and contextual information;
- a step of receiving (120) the first input dataset (ID₁) comprising the at least one address (A);
- a step of receiving (130) a second input dataset (ID₂) comprising at least one listed structure entry (LS), preferably a plurality of listed structure entries (LS) ;
- a step of applying (140) the machine-learning model to the at least one address (A), wherein
i. the machine-learning model has been trained with a training dataset to determine (143) the probability of an address (A) being a listed building (LB) using the set of listed building classification parameters (CP) and the at least one listed structure entry (LS), preferably the plurality of listed structure entries (LS); and
ii. the probability is used to assign (144) a label indicating whether the address (A) is a listed building (LB) using a predefined threshold; and
- a step of producing (150) a first output dataset comprising the at least one address from the first input dataset (ID₁), and at least one of the determined probability and the assigned label for the at least one address (A).

2. The method of claim 1, wherein
- the at least one address (A) comprises an address string (AS), an address identifier (AI), land parcel information or any combination thereof, wherein the land parcel information comprises the land parcel length (PL), the land parcel width (PW), the spatial orientation of the land parcel (PO), the land parcel coordinates (PC) or any combination thereof, wherein the land parcel coordinates (PC) are preferably located at the centroid of the land parcel; and/or
- the at least one listed structure entry (LS), preferably the plurality of listed structure entries (LS), comprises a listed structure identifier (LSI), listed structure coordinates (LSC), a listed structure string (LSS) or any combination thereof, wherein the listed structure string (LSS) comprises a name and/or a description of a listed structure.

3. The method of any one of the preceding claims, wherein the step of applying (140) the machine-learning model comprises:
- a step of assigning (141) to each of the at least one address (A) from the first input dataset (ID₁) the one listed structure entry (LS) from the second input dataset (ID₂) with the shortest spatial distance between the land parcel coordinates (PC) and the listed structure coordinates (LSC) to generate at least one address-listed structure entry pair (A-LS); and
- a step of determining (142) indices (I) of the at least one address-listed structure entry pair (A-LS) using the listed building classification parameters (CP), wherein the determination (142) of the indices (I) comprises processing geospatial and/or contextual information.

4. The method of claim 3, wherein each index (I) of the listed building classification parameters (CP) for the at least one address-listed structure entry pair (A-LS) is preferably determined by any one of the following methods:
- determining the geospatial distance between the land parcel coordinate (PC) and the listed structure coordinate (LSC) of an address-listed structure entry pair (A-LS);
- dividing the geospatial distance between the land parcel coordinate (PC) and the listed structure coordinate (LSC) of an address-listed structure entry pair (A-LS) by the geospatial distance between the listed structure coordinate (LSC) and its second closest land parcel coordinate;
- dividing the geospatial distance between the land parcel coordinate (PC) and the listed structure coordinate (LSC) of an address-listed structure entry pair (A-LS) by the land parcel length (PL);
- determining whether the listed structure coordinate (LSC) is geospatially located within the boundaries of the land parcel (P) of the address (A) of an address-listed structure entry pair (A-LS).
- determining the contextual string distance between the address string (AS) and the listed structure string (LSS) of an address-listed structure entry pair (A-LS); or
- determining a contextual building score using a further machine-learning model, wherein the contextual building score indicates the likelihood a listed structure entry (LS) of an address-listed structure entry pair (A-LS) to describe a building (B).

5. A machine-learning model for determining a probability of at least one address (A) in a first input dataset (ID₁) being a listed building (LB), in particular for use in the method of any one of the preceding claims, comprising:
- a set of listed building classification parameters (CP) based on geospatial and contextual information;
- adjusted weights for the set of listed building classification parameters (CP); and
- a set of instructions configured to cause a processor to receive at least one address (A) and to determine the probability of the at least one address (A) being a listed building (LB) using the adjusted weights; and to output the probability.

6. A computer-implemented method of generating a training dataset for a machine-learning model, in particular the machine-learning model of claim 5, the method comprising:
- a step of receiving (210) the first input dataset (ID₁) comprising the at least one address (A),
wherein the at least one address (A) comprises an address string (AS), an address identifier (AI), land parcel information or any combination thereof, wherein the land parcel information comprises a land parcel length (PL), a land parcel width (PW), a spatial orientation of the land parcel (PO), land parcel coordinates (PC) or any combination thereof, wherein the land parcel coordinates are preferably located at the centroid of the land parcel;
- a step of receiving (220) a second input dataset (ID₂) comprising at least one listed structure entry (LS), preferably a plurality of listed structure entries (LS),
wherein the at least one listed structure entry (LS), preferably the plurality of listed structure entries (LS), comprises a listed structure identifier (LSI), listed structure coordinates (LSC), a listed structure string (LSS) or any combination thereof, wherein the listed structure string (LSS) comprises a name and/or a description of a listed structure;
- a step of assigning (230) to each of the at least one address (A) from the first input dataset (ID₁) the one listed structure entry (LS) from the second input dataset (ID₂) with the shortest spatial distance between the land parcel coordinates (PC) and the listed structure coordinates (LSC) to generate at least one address-listed structure entry pair (A-LS);
- a step of receiving (240) a set of listed building classification parameters (CP),
- a step of determining (250) indices (I) of the at least one address-listed structure entry pair (A-LS) using the listed building classification parameters (CP), wherein the determination (250) of the indices (I) comprises processing geospatial and/or contextual information; and
- a step of generating (260) a training dataset by manually assigning Boolean labels indicating whether the address (A) belongs to a listed building (LB) for each of the at least one address (A) of at least the subset of the at least one address-listed structure entry pair (A-LS).

7. The method of claim 6, wherein each index (I) of the listed building classification parameters (CP) for the at least one address-listed structure entry pair (A-LS) is determined (250) by any one of the following methods:
- determining the geospatial distance between the land parcel coordinate (PC) and the listed structure coordinate (LSC) of an address-listed structure entry pair (A-LS);
- dividing the geospatial distance between the land parcel coordinate (PC) and the listed structure coordinate (LSC) of an address-listed structure entry pair (A-LS) by the geospatial distance between the listed structure coordinate (LSC) and its second closest land parcel coordinate;
- dividing the geospatial distance between the land parcel coordinate (PC) and the listed structure coordinate (LSC) of an address-listed structure entry pair (A-LS) by the land parcel length (PL);
- determining whether the listed structure coordinate (LSC) is geospatially located within the boundaries of the land parcel (P) of the address (A) of an address-listed structure entry pair (A-LS);
- determining the contextual string distance between the address string (AS) and the listed structure string (LSS) of an address-listed structure entry pair (A-LS); or
- determining a contextual building score using a further machine-learning model,
wherein the contextual building score indicates the likelihood a listed structure entry (LS) of an address-listed structure entry pair (A-LS) to describe a building (B).

8. The method of claim 4 or 7, wherein the further machine-learning model for determining the contextual building score is a neural network and the determination of the contextual building score comprises:
- a step of providing the neural network that has been trained with a further training dataset to determine a further probability of at least one listed structure entry (LS), preferably a plurality of listed structure entries (LS), to describe a building (B);
- a step of receiving at least one listed structure entry (LS), preferably a plurality of listed structure entries (LS);
- a step of applying the neural network to the at least one listed structure entry (LS), preferably the plurality of listed structure entries (LS), to determine the further probability of the at least one listed structure entry (LS), preferably the plurality of listed structure entries (LS), to describe a building;
- optionally, a step of assigning a further label indicating whether the at least one listed structure entry (LS), preferably the plurality of listed structure entries (LS), describes a building (B) using the further probability and a predefined threshold;
- returning the further probability and/or the further label as the contextual building score for the at least one listed structure entry (LS), preferably the plurality of listed structure entries (LS).

9. A training dataset for training a machine-learning model of claim 5, comprising
- at least a subset of an at least one address-listed structure entry pair (A-LS), in particular at least the subset generated in the method of any of claims 6 to 8;
- indices (I) of listed building classification parameters (CP) for the at least one address-listed structure entry pair (A-LS), in particular the indices (I) determined in the method of any of claims 6 to 8;
- Boolean labels for the at least one address-listed structure entry pair (A-LS), in particular the Boolean labels manually assigned in the method of any of claims 6 to 8; or
- any combination thereof.

10. A computer-implemented method of training a machine-learning model for determining a probability of at least one address (A) in a first input dataset (ID₁) being a listed building (LB), in particular the machine-learning model of claim 5, the method comprising:
- a step of receiving a manually labelled training dataset, in particular the training dataset generated in the method any of claims 6 to 8, comprising a set of listed building classification parameters (CP) based on geospatial and contextual information;
- a step of manually determining an initial weight for each listed building classification parameter (CP);
- a step of training the machine-learning model by providing the training dataset and by providing instructions to the machine-learning model to adjust the weights of the listed building classification parameters (CP) based on the training dataset to generate adjusted weights of the listed building classification parameters (CP);
- a step of evaluating the performance of the machine-learning model based on a test dataset; and
- a step of producing a second output dataset comprising the adjusted weights of the listed building classification parameters (CP).

11. The method of claim 10, wherein the machine-learning model is trained using an ensemble learning algorithm, preferably a boosting ensemble learning algorithm, more preferably a stochastic gradient boosting ensemble learning algorithm, most preferably XGBoost.

12. A data processing system comprising means for carrying out the method of any one of claims 1, 2, 3, 4, 6, 7, 8, 10, or 11.

13. A computer program comprising instructions which, when the program is executed by a computer, cause the computer to carry out the method of any one of claims 1, 2, 3, 4, 6, 7, 8, 10, or 11.

14. A computer-readable medium comprising instructions which, when executed by a computer, cause the computer to carry out the method of any one of claims 1, 2, 3, 4, 6, 7, 8, 10, or 11.
